# EUROPEAN PATENT APPLICATION

(11) **EP 4 742 013 A1**
(43) Date of publication of application: **13.05.2026**
(21) Application number: 24887901.7
(22) Date of filing: 04.11.2024
(51) Int. Cl.: G06F 3/044

(54) **INTERACTION METHOD FOR STYLUS AND ELECTRONIC DEVICE, AND STYLUS AND ELECTRONIC DEVICE**

(30) Priority: 07.11.2023 CN 202311480916
(71) Applicant: Huawei Technologies Co., Ltd., Shenzhen, Guangdong 518129 (CN)
(72) Inventor: ZHENG, Tao, Shenzhen, Guangdong 518129 (CN)
(74) Representative: Goddar, Heinz J.
(86) International application number: PCT/CN2024/129687
(87) International publication number: WO 2025/098289

(57) **Abstract**

This application provides a method for interaction between a stylus and an electronic device, a stylus, and an electronic device. In the method, the stylus transmits a first coded signal when the stylus is in contact with a screen of the electronic device; when the stylus transmits the first coded signal, the electronic device collects a coded signal at a first sampling frequency, and performs a writing operation; when the stylus leaves the screen, the stylus transmits a second coded signal, where a frequency of the first coded signal is different from a frequency of the second coded signal; and when the stylus transmits the second coded signal, the electronic device collects a coded signal at the first sampling frequency. In this application, when the stylus leaves the screen, the electronic device still collects the coded signal at the first sampling frequency. In this way, when the screen is in contact with the screen again, the electronic device can more quickly detect that the stylus is in contact with the screen, and can perform a line drawing operation in time, thereby avoiding a problem that water does not flow out when the stylus is in contact with the screen, and improving writing immediateness of the stylus.

## Description

This application claims priority to Chinese Patent Application No. 202311480916.7, filed with the China National Intellectual Property Administration on November 7, 2023 and entitled "METHOD FOR INTERACTION BETWEEN STYLUS AND ELECTRONIC DEVICE, STYLUS, AND ELECTRONIC DEVICE", which is incorporated herein by reference in its entirety.

### TECHNICAL FIELD

Embodiments of this application relate to the field of communication technologies, and in particular, to a method for interaction between a stylus and an electronic device, a stylus, and an electronic device.

### BACKGROUND

With development of touch control technologies, more electronic devices perform human-machine interaction in a touch control manner. For example, a user may operate a screen of an electronic device via a stylus to provide an input for the electronic device, and the electronic device may perform a corresponding operation based on the input.

Currently, there is a stylus that can operate all day long and always transmit a coded signal. When detecting the coded signal, the electronic device may perform a writing operation. When the electronic device fails to detect the coded signal, the electronic device enters a low power consumption mode. When the electronic device detects the coded signal again, the electronic device may exit the low power consumption mode, and continue to perform the writing operation. There is a delay in this period of time, causing a writing delay.

### SUMMARY

Embodiments of this application provide a method for interaction between a stylus and an electronic device, a stylus, and an electronic device. When the stylus leaves a screen, the electronic device still collects a coded signal at a first sampling frequency; and when the screen is in contact with the screen again, the electronic device can quickly detect that the stylus is in contact with the screen, thereby avoiding a writing delay, and improving writing immediateness of the stylus.

According to a first aspect, an embodiment of this application provides a method for interaction between a stylus and an electronic device. The method is applied to a system for interaction between a stylus and an electronic device, and the system may include the stylus and the electronic device. In the method, the stylus transmits a first coded signal when the stylus is in contact with a screen of the electronic device; and when the stylus transmits the first coded signal, the electronic device collects a coded signal at a first sampling frequency, and performs a writing operation. When the electronic device detects that the stylus transmits the first coded signal, the electronic device may determine that the stylus is in contact with the screen, and the electronic device may perform a writing operation based on a location of the stylus on the screen.

When the stylus leaves the screen, the stylus transmits a second coded signal, where a frequency of the first coded signal is different from a frequency of the second coded signal. When the stylus transmits the second coded signal, the electronic device collects a coded signal at the first sampling frequency. When the electronic device detects that the stylus transmits the first coded signal, the electronic device may determine that the stylus leaves the screen, and the electronic device may stop performing the writing operation. In addition, in embodiments of this application, the electronic device does not reduce the sampling frequency, but continues to collect the coded signal at the first sampling frequency.

In embodiments of this application, the stylus may transmit coded signals of different frequencies, to indicate that the stylus is in contact with the screen or leaves the screen. In this way, the electronic device may determine, based on the detected coded signal, that the stylus is in contact with the screen or leaves the screen. When the stylus leaves the screen, the electronic device still collects the coded signal at the first sampling frequency. In this way, when the screen is in contact with the screen again, the electronic device can more quickly detect that the stylus is in contact with the screen, and can perform a line drawing operation in time, thereby avoiding a problem that water does not flow out when the stylus is in contact with the screen, and improving writing immediateness of the stylus.

In addition, in embodiments of this application, the stylus may transmit coded signals of different frequencies, to indicate that the stylus is in contact with the screen or leaves the screen. Compared with a conventional-technology solution in which the stylus does not transmit the coded signal after leaving the screen, in this application, after the stylus leaves the screen, the second coded signal may be transmitted, so that the electronic device can detect the second coded signal more quickly, and the electronic device can stop the line drawing operation in time, thereby reducing a response delay and avoiding a trailing phenomenon.

Similarly, when the stylus is in contact with the screen again, the stylus transmits the first coded signal. Correspondingly, when the stylus transmits the first coded signal, the electronic device collects the coded signal at the first sampling frequency, and the electronic device may perform the writing operation based on the location of the stylus on the screen.

The following describes an interaction process between the stylus and the electronic device by using an example in which the stylus starts from power-on.

First, the stylus enters a first sleep state after the stylus is powered on. When the stylus enters the first sleep state, the stylus performs detection on an acceleration transducer. That the stylus performs detection on the acceleration transducer may be understood as that the stylus detects, based on data collected by the acceleration transducer, whether the stylus is in a used state. In some embodiments, when the data collected by the acceleration transducer is greater than or equal to an acceleration threshold, the stylus may determine that the stylus is in the used state; or when the data collected by the acceleration transducer is less than an acceleration threshold, the stylus may determine that the stylus is in an unused state.

In some embodiments, when the stylus is in the used state, the stylus may transmit the second coded signal, to indicate that the stylus is in the used state but is not in contact with the screen of the electronic device. Correspondingly, when the stylus transmits the second coded signal, the electronic device collects the coded signal at the first sampling frequency.

When transmitting the second coded signal, the stylus may start timing. If it is not detected, within first preset duration, that the stylus is in contact with the screen, the stylus enters the first sleep state. In this way, power consumption of the stylus can be reduced. If it is detected, within the first preset duration, that the stylus is in contact with the screen, the stylus may transmit the first coded signal. Correspondingly, the electronic device detects that the stylus transmits the first coded signal, and the electronic device may determine that the stylus is in contact with the screen. The electronic device may perform the writing operation based on the location of the stylus on the screen.

Similarly, when the stylus leaves the screen, the stylus transmits the second coded signal, and the electronic device may collect the coded signal at the first sampling frequency.

Second, the stylus enters a first sleep state after the stylus is powered on. When the stylus enters the first sleep state, the stylus performs detection on an acceleration transducer.

In some embodiments, when the stylus is in a used state, the stylus enters a second sleep state. When the stylus enters the second sleep state, the stylus performs detection on an acceleration transducer and performs detection on a pressure sensor. Performing detection on the pressure sensor may be understood as that the stylus detects, based on data collected by the pressure sensor, whether the stylus is in contact with the screen.

When the stylus is in contact with the screen, the stylus transmits the first coded signal. Correspondingly, the electronic device collects the coded signal at the first sampling frequency, and performs the writing operation. Similarly, when the stylus leaves the screen, the stylus transmits the second coded signal, and the electronic device collects the coded signal at the first sampling frequency.

In this example, when the stylus is in the used state, the stylus does not need to start to transmit the second coded signal, but starts to perform detection on the pressure sensor. In this example, a step of transmitting the second coded signal by the stylus is reduced, and power consumption of the stylus is reduced.

In a possible implementation, after the stylus enters the second sleep state, if it is not detected, within second preset duration, that the stylus is in contact with the screen, the stylus may enter the first sleep state, to reduce power consumption of the stylus. If it is detected, within the second preset duration, that the stylus is in contact with the screen, the stylus transmits the first coded signal.

In a possible implementation, after the stylus transmits the second coded signal, if it is not detected, within third preset duration, that the stylus is in contact with the screen, the stylus enters the second sleep state, to reduce power consumption of the stylus. If it is detected, within the third preset duration, that the stylus is in contact with the screen, the stylus transmits the first coded signal.

Third, the stylus enters a second sleep state after the stylus is powered on. When the stylus is in contact with the screen, the stylus transmits the first coded signal. Correspondingly, the electronic device collects the coded signal at the first sampling frequency, and performs the writing operation. Similarly, when the stylus leaves the screen, the stylus transmits the second coded signal, and the electronic device collects the coded signal at the first sampling frequency.

In a possible implementation, after the stylus enters the second sleep state, if it is not detected, within second preset duration, that the stylus is in contact with the screen, the stylus may enter the first sleep state, to reduce power consumption of the stylus. If it is detected, within the second preset duration, that the stylus is in contact with the screen, the stylus transmits the first coded signal.

In a possible implementation, after the stylus transmits the second coded signal, if it is not detected, within third preset duration, that the stylus is in contact with the screen, the stylus enters the second sleep state, to reduce power consumption of the stylus. If it is detected, within the third preset duration, that the stylus is in contact with the screen, the stylus transmits the first coded signal.

In embodiments of this application, after the stylus is powered on, the stylus enters the sleep state in various manners, and the coded signal is transmitted in various manners. This facilitates flexible configuration of the stylus, and has a wide application scope.

According to a second aspect, an embodiment of this application provides a method for interaction between a stylus and an electronic device, applied to the stylus. The method may be performed by an electronic device or a chip in the electronic device. The following uses the electronic device as an example for description. In the method, when being in contact with a screen of the electronic device, the stylus transmits a first coded signal. The stylus transmits a second coded signal when leaving the screen, where a frequency of the first coded signal is different from a frequency of the second coded signal.

In a possible implementation, before the stylus is in contact with the screen of the electronic device, the method further includes: entering a first sleep state after power-on, where when entering the first sleep state, the stylus performs detection on an acceleration transducer; or entering a second sleep state after power-on, where when entering the second sleep state, the stylus performs detection on an acceleration transducer and performs detection on a pressure sensor.

In a possible implementation, after entering the first sleep state, the method further includes: when it is determined, based on data collected by the acceleration transducer, that the stylus is in a used state, transmitting the second coded signal, and detecting, based on data collected by the pressure sensor, whether the stylus is in contact with the screen.

In a possible implementation, after transmitting the second coded signal, the method further includes: if it is not detected, within first preset duration, that the stylus is in contact with the screen, entering the first sleep state.

Transmitting the first coded signal when being in contact with the screen of the electronic device includes: if it is detected, within the first preset duration, that the stylus is in contact with the screen, transmitting the first coded signal.

In a possible implementation, after entering the first sleep state, the method further includes: when it is determined, based on data collected by the acceleration transducer, that the stylus is in a used state, entering the second sleep state.

In a possible implementation, after entering the second sleep state, the method further includes: detecting, based on data collected by the pressure sensor, whether the stylus is in contact with the screen.

In a possible implementation, the method further includes: if it is not detected, within second preset duration, that the stylus is in contact with the screen, entering the first sleep state.

Transmitting the first coded signal when being in contact with the screen of the electronic device includes: if it is detected, within the second preset duration, that the stylus is in contact with the screen, transmitting the first coded signal.

In a possible implementation, after transmitting the second coded signal, the method further includes: if it is not detected, within third preset duration, that the stylus is in contact with the screen, entering the second sleep state; and if it is detected, within the third preset duration, that the stylus is in contact with the screen, transmitting the first coded signal.

In a possible implementation, after transmitting the second coded signal when leaving the screen, the method further includes: when being in contact with the screen again, transmitting the first coded signal.

According to a third aspect, an embodiment of this application provides a method for interaction between a stylus and an electronic device, applied to the electronic device. The method may be performed by an electronic device or a chip in the electronic device. The following uses the electronic device as an example for description. In the method, when the stylus transmits a first coded signal, the electronic device collects a coded signal at a first sampling frequency, and performs a writing operation. The first coded signal is transmitted when the stylus is in contact with a screen of the electronic device.

When the stylus transmits a second coded signal, the electronic device collects a coded signal electronic apparatus at the first sampling frequency, where the second coded signal is transmitted when the stylus leaves the screen, and a frequency of the first coded signal is different from a frequency of the second coded signal.

In a possible implementation, when the stylus transmits the second coded signal, after collecting the coded signal at the first sampling frequency, the method further includes: When a strength of the second coded signal is less than or equal to a strength threshold, the electronic device detects the coded signal at a second sampling frequency, where the second sampling frequency is less than the first sampling frequency.

In this implementation, when the stylus transmits the second coded signal, it indicates that the stylus leaves the screen, and the electronic device may detect the strength of the second coded signal. When the electronic device detects that the strength of the second coded signal is less than the strength threshold, it is determined that the stylus is far away from the screen (for example, a distance between the stylus and the screen is greater than or equal to a distance threshold), the electronic device may enter a low power consumption mode. That the electronic device enters the low power consumption mode may be understood as that the electronic device detects the coded signal at the second sampling frequency. In this way, power consumption of the electronic device can be reduced.

In a possible implementation, if the first coded signal is not detected within preset duration after the electronic device detects the second coded signal, the electronic device may determine that the stylus is not in contact with the screen for a long time, the user may not write, and the electronic device may enter the low power consumption mode. In this way, power consumption of the electronic device can also be reduced.

According to a fourth aspect, an embodiment of this application provides a stylus. The stylus may include a processor and a memory. The memory is configured to store computer-executable program code, where the program code includes instructions. When the processor executes the instructions, the instructions cause the electronic device to perform the method according to the second aspect.

According to a fifth aspect, an embodiment of this application provides an electronic device. The electronic device may include a processor and a memory. The memory is configured to store computer-executable program code, where the program code includes instructions. When the processor executes the instructions, the instructions cause the electronic device to perform the method according to the third aspect.

According to a sixth aspect, an embodiment of this application provides a system for interaction between a stylus and an electronic device. The system includes the stylus according to the fourth aspect and the electronic device according to the fifth aspect. The system for interaction between the stylus and the electronic device may be configured to perform the method according to the first aspect.

According to a seventh aspect, an embodiment of this application provides a computer program product including instructions. When the computer program product runs on a computer, the computer is enabled to perform the method according to the first aspect and the second aspect.

According to an eighth aspect, an embodiment of this application provides a computer-readable storage medium, where the computer-readable storage medium stores instructions, and when the instructions are run on a computer, the computer is enabled to perform the method according to the first aspect and the second aspect.

For beneficial effect of the possible implementations of the second aspect to the eighth aspect, refer to the beneficial effect brought by the first aspect. Details are not described herein again.

### BRIEF DESCRIPTION OF DRAWINGS

FIG. 1 is a diagram of a structure of a screen;
FIG. 2 is a diagram of a touch control principle of a screen;
FIG. 3 is a diagram of a time sequence of interaction between an in-cell screen and a stylus;
FIG. 4 is a diagram of another time sequence of interaction between an in-cell screen and a stylus;
FIG. 5 is a diagram of a current time sequence in which there is a delay during interaction between a screen and a stylus;
FIG. 6 is a diagram of a case in which water does not flow out when a stylus falls;
FIG. 7A is a diagram of a structure of a stylus according to an embodiment of this application;
FIG. 7B is a diagram of another structure of a stylus according to an embodiment of this application;
FIG. 8 is a diagram of a structure of an electronic device according to an embodiment of this application;
FIG. 9A is a schematic flowchart of an embodiment of a method for interaction between a stylus and an electronic device according to an embodiment of this application;
FIG. 9B is a schematic flowchart of another embodiment of a method for interaction between a stylus and an electronic device according to an embodiment of this application;
FIG. 9C is a schematic flowchart of an embodiment of a method for interaction between a stylus and an electronic device according to an embodiment of this application;
FIG. 9D is a schematic flowchart of an embodiment of a method for interaction between a stylus and an electronic device according to an embodiment of this application;
FIG. 9E is a schematic flowchart of an embodiment of a method for interaction between a stylus and an electronic device according to an embodiment of this application;
FIG. 10 is a diagram of reducing a writing delay during interaction between a stylus and an electronic device according to an embodiment of this application;
FIG. 11A is a schematic flowchart of an embodiment of a method for interaction between a stylus and an electronic device according to an embodiment of this application;
FIG. 11B is a schematic flowchart of an embodiment of a method for interaction between a stylus and an electronic device according to an embodiment of this application;
FIG. 11C is a schematic flowchart of an embodiment of a method for interaction between a stylus and an electronic device according to an embodiment of this application; and
FIG. 11D is a schematic flowchart of an embodiment of a method for interaction between a stylus and an electronic device according to an embodiment of this application.

### DESCRIPTION OF EMBODIMENTS

For ease of understanding, the following first describes related terms and concepts in embodiments of this application.

Stylus: A basic principle of interaction between the stylus and an electronic device is as follows: When the stylus is in contact with a screen of the electronic device, a capacitance value of the screen is affected. In response to a change of the capacitance value of the screen, the electronic device may identify information such as an input event and coordinates of the stylus. In some embodiments, the stylus may also be referred to as a stylus pen. In some embodiments, the stylus may alternatively be a capacitive pen.

Screen: The screen in embodiments of this application is a screen of an electronic device, and the screen may also be referred to as a touchscreen, a touch panel, or the like.

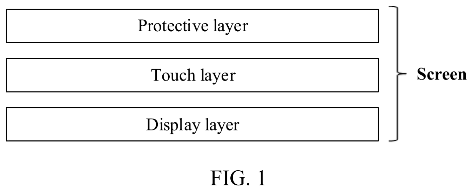

In some embodiments, as shown in FIG. 1, a structure of the screen may be divided into three layers: a protective layer, a touch layer, and a display layer. For example, the protective layer may be glass. For example, the touch layer may include an electrode array. For example, the display layer may include a liquid crystal, a light-emitting diode, or the like. Based on different display principles, display layers may be different.

In some embodiments, the screen of the electronic device may include an in-cell screen and an on-cell screen. The in-cell screen integrates the touch layer and the display layer. For example, the display layer includes the liquid crystal. In the in-cell screen, the touch layer is embedded into the liquid crystal at the display layer. An innovation of the in-cell screen lies in loading a circuit to the liquid crystal, so that the liquid crystal screen has sensing and touch input capabilities. The in-cell screen not only has higher precision, but also does not need the touch layer, so that the entire screen is lighter and thinner. In the on-cell screen, the touch layer is embedded into between a color filter substrate and a polarizer at the display layer. In the following embodiment, an example in which the screen is the in-cell screen is used for description. It may be understood that the method provided in this embodiment of this application is applicable to the on-cell screen having a sampling frequency.

In some embodiments, the screen of the electronic device may include a self-capacitance screen and a mutual-capacitance screen. The following separately describes touch control principles of the two types of screens.

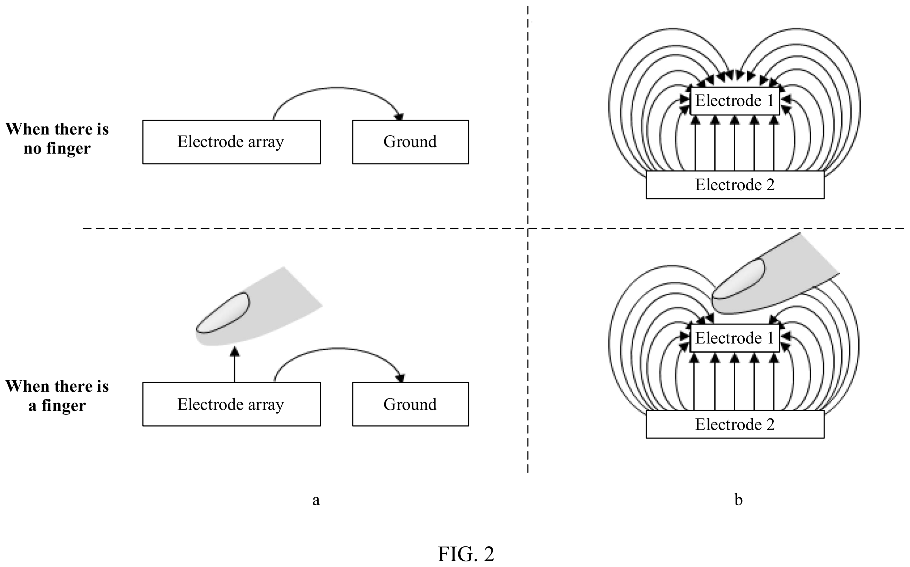

Refer to a in FIG. 2. The self-capacitance screen may include electrode arrays arranged horizontally and vertically, and the electrode arrays are separately grounded to form a capacitor. The capacitor is a self-capacitance, that is, a capacitance of an electrode to ground. A finger is used as an example. When the finger touches the self-capacitance screen, a capacitance value of the finger is superimposed on an original capacitance value of the self-capacitance screen, so that the capacitance value of the self-capacitance screen increases. During touch detection, the electronic device sequentially and separately detects the horizontal electrode and the vertical electrode. The electronic device may separately determine, based on a change of a capacitance value before and after the touch, a horizontal coordinate and a vertical coordinate during the touch, to obtain touch coordinates of a finger.

Refer to b in FIG. 2. The mutual-capacitance screen may include an electrode array arranged horizontally and vertically. Different from the self-capacitance screen, the mutual-capacitance screen forms a capacitor at a position where two electrodes intersect, and the two electrodes respectively form two poles of the capacitor. A finger is used as an example. When the finger touches the mutual-capacitance screen, the finger affects coupling between two electrodes near a touch point, thereby changing a capacitance value between the two electrodes. During touch detection, the electronic device may determine touch coordinates of a finger based on a location of an intersection of the two electrodes. It should be understood that, in b in FIG. 2, an electrode 1 and an electrode 2 represent two electrodes near the touch point.

It should be understood that a type of a screen of the electronic device is not limited in embodiments of this application.

Currently, the capacitive pen may include a passive capacitive pen and an active capacitive pen. The following briefly describes touch principles of the passive capacitive pen and the active capacitive pen.

### 1. Passive capacitive pen:

A touch principle of the passive capacitive pen is similar to that of a finger. When the passive capacitive pen touches the screen, the passive capacitive pen and the screen form a coupling capacitance, which affects a capacitance value of the screen. The electronic device may determine information such as coordinates of the passive capacitive pen based on a change of the capacitance value of the screen.

### 2. Active capacitive pen

In some embodiments, an electrode may be disposed on a tip of the active capacitive pen, and the electrode may be referred to as a transmit electrode. The active capacitive pen may transmit a coded signal by using the transmit electrode. The coded signal may transmit pressure sensing information, a coded frequency of the active capacitive pen, version information, and the like. This is not limited in embodiments of this application. The coded signal may be considered as a voltage signal. Correspondingly, the electronic device may receive the coded signal through the electrode array.

In some embodiments, the active capacitive pen may include a capacitive pen with a protocol and a capacitive pen without a protocol.

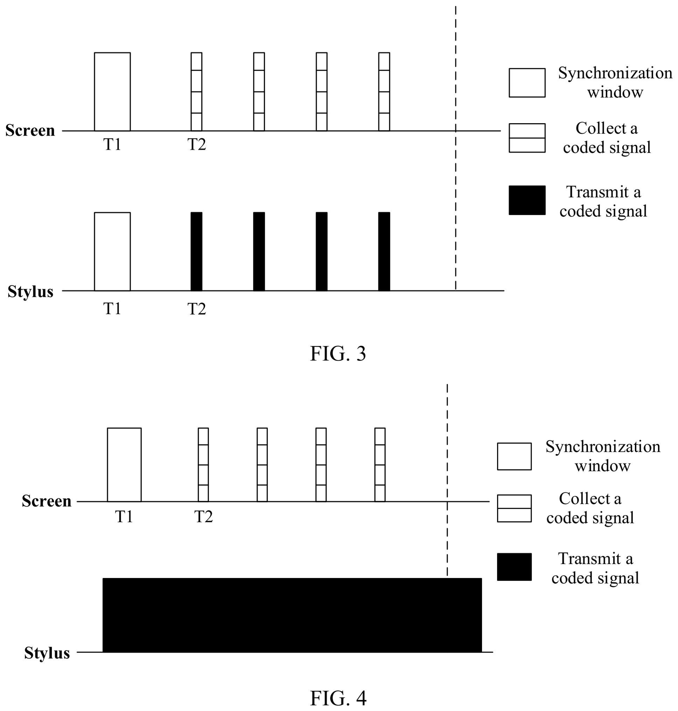

For a capacitive pen with a protocol, a protocol for interaction with the electronic device is pre-stored in the capacitive pen, and the protocol indicates a method for interaction between the capacitive pen and the electronic device. Before a process of interaction between an electronic device and a capacitive pen with a protocol is described, an operating principle of interaction between the in-cell screen and a stylus (a capacitive pen with a protocol) is first described with reference to FIG. 3 by using an in-cell screen as an example.

The in-cell screen is characterized by time division multiplexing of display and touch. In some embodiments, the in-cell screen may also be referred to as a screen integrated display and touch. The in-cell screen does not always collect a coded signal of the stylus. The in-cell screen further needs to intermittently collect a signal of the hand, and needs to perform display operating at different time. To ensure that the in-cell screen can collect the coded signal of the stylus, the in-cell screen needs to be synchronized and aligned with the stylus in advance; and to ensure that the sampling frequency of the in-cell screen is equal to the coded frequency of the stylus, and when the stylus transmits the coded signal, the in-cell screen is collecting the coded signal. In addition, when the in-cell screen does not collect the coded signal of the stylus, the in-cell screen may collect a signal of the hand, display an interface of the electronic device, and the like.

The electronic device may broadcast a synchronization signal through the electrode array. The synchronization signal is used to request to synchronize with the stylus. In some embodiments, the synchronization signal may be considered as a voltage signal. FIG. 3 is an operating time sequence diagram of interaction between the in-cell screen and the stylus. Refer to FIG. 3. When the stylus receives the signal by using the receive electrode in the stylus, the stylus may be synchronized and aligned with the electronic device at a moment T1.

The synchronization and alignment may include: The stylus and the electronic device exchange respective information. For example, the stylus may synchronize a coded frequency of the stylus to the electronic device, so that the electronic device can sample a coded signal based on a same frequency. For example, the stylus and the electronic device may negotiate a coded frequency and a frequency of sampling the coded signal, to ensure that the frequency of sampling the coded signal by the electronic device is the same as the coded frequency of the stylus.

In some embodiments, the synchronization and alignment may further include: The stylus and the electronic device negotiates information such as time at which the stylus starts to transmit the coded signal and a quantity of times that the stylus transmits the coded signal in one periodicity. The time at which the stylus starts to transmit the coded signal may also be considered as time at which the electronic device starts to collect the coded signal, for example, a moment T2 in FIG. 3. It should be understood that, in FIG. 3, an example in which a quantity of times that the stylus transmits the coded signal in one periodicity is four is used.

A specific process of performing synchronization and alignment between the stylus and the electronic device is not described in this embodiment of this application. For details, refer to an existing related technology.

In some embodiments, the stylus and the electronic device may perform synchronization and alignment in the following encoding manner: direct sequence spread spectrum (direct sequence spread spectrum, DSSS), non-return-to-zero line code (non-return-to-zero line code, NRZ), or the like.

Refer to FIG. 3. At a moment T2, the stylus transmits a coded signal based on a coded frequency by using the transmit electrode. Correspondingly, at the moment T2, the electronic device may collect the coded signal based on a sampling frequency that is the same as the coded frequency. A writing scenario is used as an example. The electronic device collects the coded signal, and may perform, based on the coded signal, a line drawing operation at a location at which the stylus is in contact with the screen. In a gap in which the electronic device collects the coded signal, the electronic device may collect the signal of the hand, and display the interface of the electronic device. That the electronic device performs a line drawing operation may be understood that, as a location of the stylus on the screen changes, the electronic device displays a line at a corresponding location on the screen.

In conclusion, before the stylus transmits the coded signal to the electronic device, to ensure that the electronic device can collect the coded signal, the stylus needs to be synchronized and aligned with the electronic device. Therefore, a protocol and related protocol hardware need to be deployed in the stylus. In this example, costs of the electronic device are increased, and the electronic device also needs to support the protocol.

In some embodiments, to simplify a structure of the stylus, there is currently a capacitive pen without a protocol. Protocols and related protocol hardware do not need to be deployed for a capacitive pen without a protocol. FIG. 4 is another operating time sequence diagram of interaction between the in-cell screen and the stylus. Refer to FIG. 4. The stylus (a capacitive pen without a protocol) may operate all day long, and always transmit a coded signal. For example, the in-cell screen is disposed on the electronic device. The electronic device may collect a coded signal at a specific frequency. A writing scenario is used as an example. The electronic device may perform a writing operation based on a coded signal.

In some embodiments, the writing operation may include but is not limited to performing an operation such as drawing a line, writing, or painting on the screen.

In some embodiments, detection logic of a semaphore of a coded signal may be deployed in the electronic device, and the semaphore may be understood as signal strength. A writing scenario is used as an example. In a process in which the user holds the stylus to be in contact with the screen, the stylus is closer to the screen, and a signal strength of a coded signal collected by the electronic device is stronger. When the electronic device detects that the signal strength of the coded signal reaches a strength threshold, the electronic device may determine that the stylus is in contact with the screen, and the electronic device may perform a writing operation, for example, drawing a line on the screen. However, in this example, detection logic of a semaphore of a coded signal needs to be deployed in the electronic device, which imposes many restrictions on the electronic device and results a small application scope.

In some embodiments, a pressure sensor may be disposed in the stylus, and the stylus may detect, via the pressure sensor, whether the nib of the stylus is in contact with the screen. When the nib of the stylus is in contact with the screen, the stylus may sense, based on data collected by the pressure sensor, that the nib is in contact with the screen. When the stylus determines that the nib is in contact with the screen, the stylus may operate all day long, that is, the stylus may not intermittently transmit a coded signal. The coded signal may be a pulse width modulation (pulse width modulation, PWM) wave whose frequency is F1. Correspondingly, when the electronic device detects the PWM wave whose frequency is F1, the electronic device may determine that the stylus is in contact with the screen, and the electronic device may perform a line drawing operation on the screen. When the nib of the stylus leaves the screen, the stylus may sense, based on data collected by the pressure sensor, that the nib leaves the screen, and the stylus may not transmit a coded signal. Correspondingly, when the electronic device fails to detect the PWM wave whose frequency is F1, the electronic device determines that the stylus leaves the screen, and the electronic device ends the line drawing operation.

It should be understood that, in some embodiments, the stylus (a capacitive pen without a protocol) operates all day long when transmitting the coded signal, that is, the stylus transmits the coded signal all day long. When the electronic device detects the PWM wave whose frequency is F1, to comprehensively and accurately collect the coded signal, the electronic device may collect the coded signal at a first sampling frequency, and perform a line drawing operation on the screen. After the electronic device determines that the stylus leaves the screen, to reduce power consumption, the electronic device may enter a low power consumption mode. The low power consumption mode may be understood as that the electronic device collects a coded signal at a second sampling frequency. The second sampling frequency is less than the first sampling frequency. For example, the first sampling frequency may be 240 Hz, and the second sampling frequency may be 60 Hz.

In this example, after the electronic device enters the low power consumption mode, if the user holds the stylus to be in contact with the screen again, the stylus may sense, based on the data collected by the pressure sensor, that the nib is in contact with the screen, and the stylus may continue to transmit the PWM wave whose frequency is F1. Because the electronic device collects the coded signal at the second sampling frequency, when the electronic device detects the PWM wave whose frequency is F1, the electronic device may determine that the stylus is in contact with the screen, and the electronic device may exit the low power consumption mode. In other words, the electronic device may collect the coded signal at the first sampling frequency, and perform the line drawing operation on the screen.

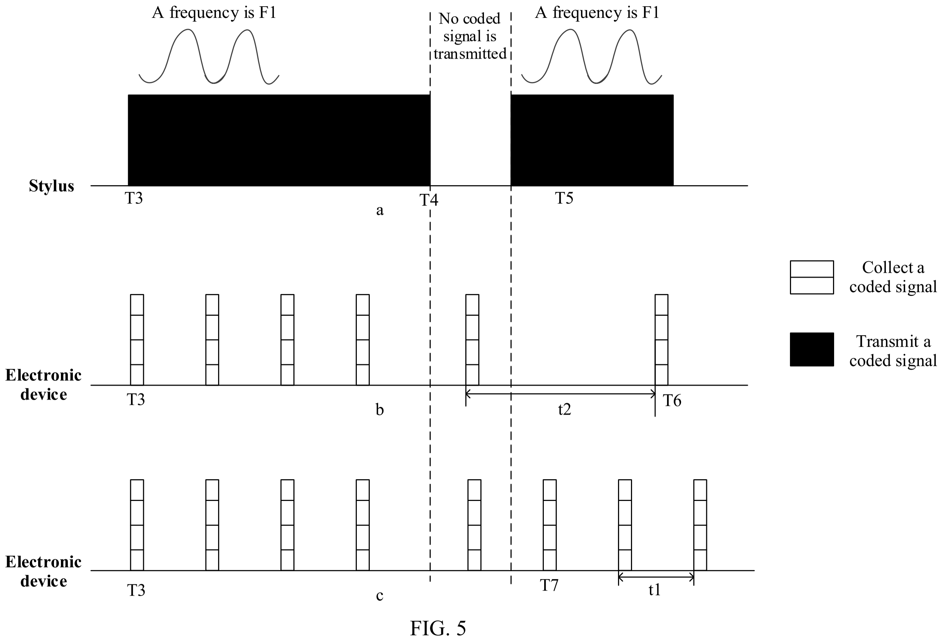

When the stylus senses, via the pressure sensor, that the nib is in contact with the screen, the stylus transmits the PWM wave whose frequency is F1. There is a delay of a first part from a moment at which the stylus is in contact with the screen to a moment at which the stylus transmits the coded signal. In addition, after the electronic device enters the low power consumption mode, because the electronic device collects the coded signal at the second sampling frequency, an interval between the interval between two adjacent samplings is long because the sampling frequency decreases. Consequently, the electronic device detects that there is a delay of a second part of the coded signal. The delay of the second part is described herein with reference to FIG. 5.

Refer to a in FIG. 5. For example, the stylus is in contact with the screen at a moment T3, and the stylus starts to transmit a PWM wave whose frequency is F1. It should be understood that, in a in FIG. 5, to reflect that the stylus operates all day long, a waveform of the PWM wave whose frequency is F1 is displayed above. At the moment T3, if the electronic device does not enter the low power consumption mode, the electronic device may collect the coded signal at the first sampling frequency. It should be understood that, in FIG. 5, to reflect that the first sampling frequency is greater than the second sampling frequency, two different sampling intervals may be used for representation. For example, when the electronic device collects the coded signal at the first sampling frequency, an interval between two samplings is t1; and when the electronic device collects the coded signal at the second sampling frequency, an interval between two samplings is t2, where t1 is less than t2.

When the stylus leaves the screen at the moment T4, the stylus does not transmit the coded signal. Refer to b in FIG. 5. At a moment T4, because the electronic device fails to detect the coded signal, it is considered that the stylus leaves the screen, and the line drawing operation does not need to be performed temporarily. The electronic device may enter the low power consumption mode, that is, the electronic device may collect the coded signal at the second sampling frequency. b and c in FIG. 5 respectively show a time sequence diagram in which the electronic device collects the coded signal at the second sampling frequency and a time sequence diagram in which the electronic device collects the coded signal at the first sampling frequency.

For example, at a moment T5, the stylus is in contact with the screen again, and the stylus continues to transmit the PWM wave whose frequency is F1. In this case, the sampling time of the electronic device is not hit. Refer to b in FIG. 5. When the electronic device collects the coded signal at the second sampling frequency, the electronic device can collect the coded signal and perform the writing operation on the screen only at a moment T6. Refer to c in FIG. 5. When the electronic device collects the coded signal at the first sampling frequency, the electronic device can collect the coded signal and perform the writing operation on the screen only at a moment T7. Refer to b and c in FIG. 5. Compared with the first sampling frequency, after the electronic device enters the low power consumption mode, if the stylus is in contact with the screen again, the electronic device detects the PWM wave whose frequency is F1 for a long time due to the low sampling frequency, and there is a delay of the second part. As a result, when the electronic device draws a line on the screen, water does not flow out of the front segment.

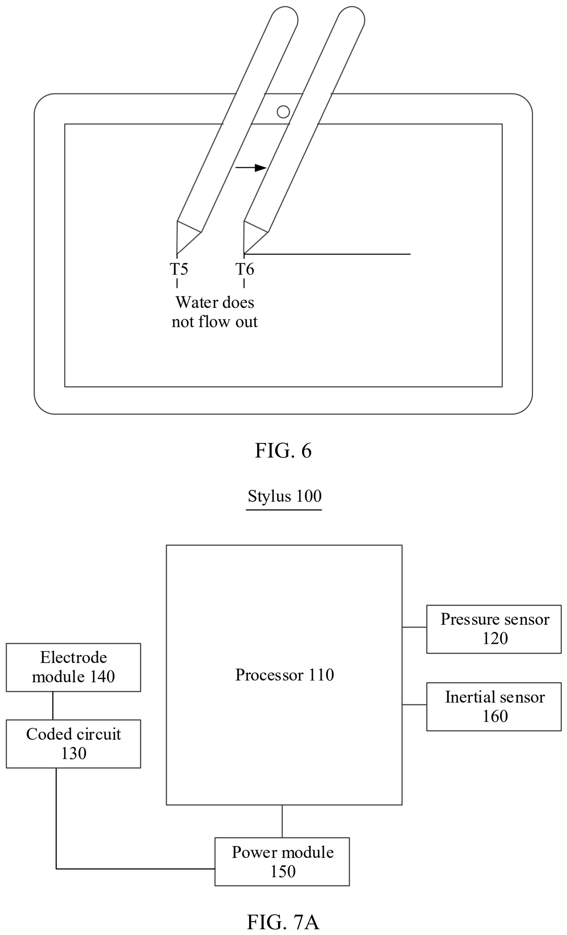

In this way, from a moment at which the stylus is in contact with the screen to a moment at which the electronic device performs a line drawing operation on the screen, there is a delay of the first part and a delay of the second part. As a result, when the electronic device draws a line on the screen, water does not flow out of the front segment, and no line is displayed. This brings a feeling of a delay of drawing a line to the user, and user experience is poor. For example, refer to FIG. 6. At the moment T5, the user holds the stylus to be in contact with the screen and starts drawing a line. However, due to a delay of the first part and a delay of the second part, the electronic device does not display a line at the moment T5, but at the moment T6, the electronic device starts to perform the line drawing operation only after collecting the coded signal at the second sampling frequency.

An embodiment of this application provides a method for interaction between a stylus and an electronic device. The stylus is a capacitive pen without a protocol. This embodiment of this application aims to reduce a delay of a second part, avoid a problem that water does not flow out of the front segment when the electronic device draws a line on a screen, and improve writing immediateness of the stylus.

In some embodiments, the electronic device in embodiments of this application may be an electronic device having a screen, and the electronic device may be referred to as user equipment (user equipment, UE), a terminal (terminal), or the like. For example, the electronic device may be a mobile phone, a tablet computer (portable Android device, PAD), a personal digital assistant (personal digital assistant, PDA), a handheld device having a wireless communication function, a computing device, a vehicle-mounted device or a wearable device, a virtual reality (virtual reality, VR) terminal device, an augmented reality (augmented reality, AR) terminal device, a wireless terminal in industrial control (industrial control), a wireless terminal in a smart home (smart home), or the like. A form of the electronic device is not specifically limited in embodiments of this application.

In some embodiments, in addition to exchanging signals by using electrodes (for example, a transmit electrode and a receive electrode in the stylus, and an electrode array in the electronic device), the electronic device and the stylus may be interconnected through another communication network, to exchange wireless signals. The communication network may be, but is not limited to, a short-range communication network like a Wi-Fi hotspot network, a Wi-Fi peer-to-peer (peer-to-peer, P2P) network, a Bluetooth network, a ZigBee network, or near field communication (near field communication, NFC) network.

Before the method for interaction between the stylus and the electronic device provided in embodiments of this application is described, structures of the stylus and the electronic device in embodiments of this application are first described.

### 1. Structure of a stylus

FIG. 7A is a diagram of a structure of a stylus according to an embodiment of this application. Refer to FIG. 7A. The stylus 100 may include a processor 110, a pressure sensor 120, a coded circuit 130, an electrode module 140, a power module 150, and an inertial sensor 160.

The processor 110 may include a storage and processing circuit configured to support an operation of the stylus 100. The storage and processing circuit may include a storage apparatus like a non-volatile memory (for example, a flash memory or another electrically programmable read-only memory constructed as a solid-state drive), a volatile memory (for example, a static or dynamic random access memory), and the like. The processing circuit in the processor 110 may be configured to control an operation of the stylus 100. The processing circuit may be based on one or more microprocessors, a microcontroller, a digital signal processor, a baseband processor, a power supply management unit, an audio chip, an application-specific integrated circuit, and the like.

In some embodiments, the processor 110 may be configured to run software or logic that is on the stylus 100 and that controls an operation of the stylus 100. In an operation process of the stylus 100, software running on the processor 110 may process a sensor input, an output of a coded signal, and interaction with an electronic device.

In this embodiment of this application, the processor 110 is configured to determine, based on data collected by the pressure sensor 120, whether the stylus 100 is in contact with a screen. When the stylus 100 is in contact with the screen, the processor 110 is configured to control the coded circuit to transmit a PWM wave whose frequency is a first frequency. When the stylus 100 leaves the screen, the processor 110 is configured to control the coded circuit to transmit a PWM wave whose frequency is a second frequency. In some embodiments, for example, the first frequency may be included in 100 kHz to 400 kHz, and the second frequency may be included in 100 kHz to 400 kHz. For example, the first frequency is 200 kHz, and the second frequency may be 100 kHz.

The pressure sensor 120 may be disposed in a nib or a rod of the stylus 100. After one end of the nib of the stylus 100 is in contact with the screen and is subjected to force, the other end of the nib moves to apply the force to the pressure sensor 120. For example, when the stylus 100 is not in contact with the screen, a pressure value collected by the pressure sensor 120 may be 0; and when the stylus 100 is in contact with the screen, the pressure value collected by the pressure sensor 120 increases.

In some embodiments, the processor 110 is further configured to adjust, based on the pressure value detected by the pressure sensor 120, a line thickness of the nib of the stylus 100 during writing.

The coded circuit 130 is configured to transmit a coded signal via the electrode module 140 under control of the processor 110.

In some embodiments, the electrode module 140 may include a transmit electrode. The coded circuit 130 is specifically configured to transmit, under control of the processor 110, the coded signal by using the transmit electrode.

In some embodiments, the electrode module 140 may further include a receive electrode. The receive electrode is configured to receive a signal transmitted by the electronic device.

In some embodiments, the transmit electrode may be located at the nib of the stylus 100, and the receive electrode may be located in the rod. Locations and quantities of the transmit electrode and the receive electrode are not limited in embodiments of this application.

The power module 150 is configured to supply power to the stylus.

In some embodiments, the power module 150 may include a dry cell. In this example, the stylus 100 may not have a charging function. After a user installs the dry cell, the stylus 100 is powered on, and the stylus may start to operate all day long.

In some embodiments, the stylus 100 may have a charging function, and the power module 150 may support charging of the stylus 100.

The inertial sensor 160 is configured to detect a posture of the stylus 100, to determine whether the user holds the stylus 100 to write. In some embodiments, the inertial sensor may include a three-axis acceleration transducer and a three-axis gyro, and/or another component configured to measure motion of the stylus 100. In the following embodiment, an example in which the inertial sensor 160 includes an acceleration transducer (acceleration transducer) is used.

To support wireless communication between the stylus 100 and the electronic device, the stylus 100 may include a wireless module. The wireless module may be, for example, a Wi-Fi hotspot module, a Wi-Fi point-to-point module, a Bluetooth module, or a near field communication module.

It may be understood that, based on an actual requirement, the stylus 100 may further include a button, a microphone, a speaker, an audio generator, a vibrator, a camera, a data port, another type of sensor, and the like. For example, the user may turn on or turn off the stylus 100 via an operation button. In some embodiments, the button may further trigger the stylus 100 to enable or disable a specific function. The function may be, for example, a screenshot function or a writing function. In some embodiments, the button may include a mechanical button and a nonmechanical button, and the button may be used to collect button pressing information from the user.

Other types of sensors may include, for example, a temperature sensor, an ambient light sensor, a light-based proximity sensor, a contact sensor, and a magnetic sensor.

The stylus 100 may further include a status indicator like a light-emitting diode. The status indicator is configured to prompt the user with a status of the stylus 100.

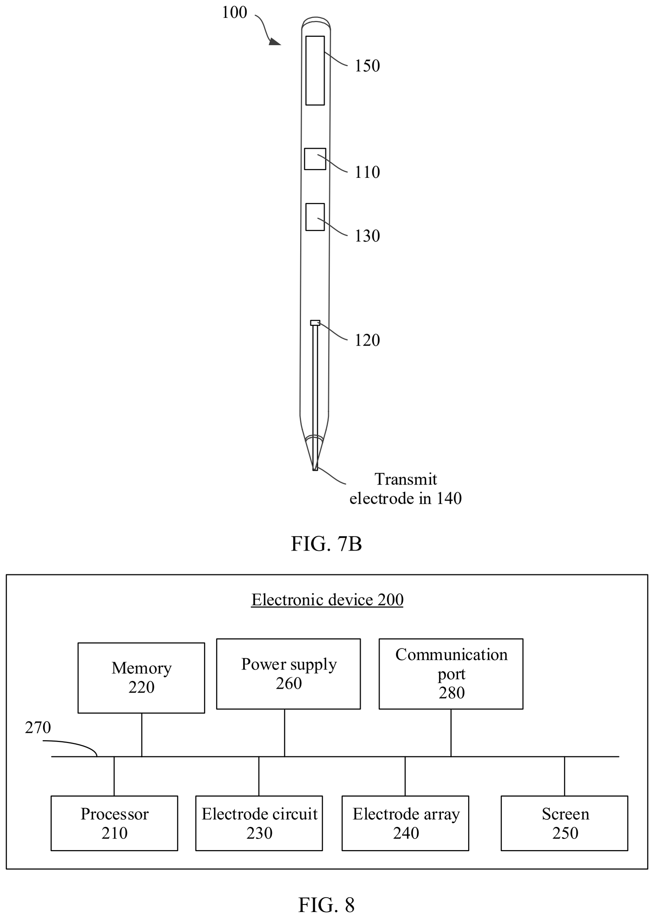

FIG. 7B is a diagram of another structure of a stylus according to an embodiment of this application. It should be understood that FIG. 7B shows a three-dimensional diagram of FIG. 7A. It should be understood that FIG. 7B is an example diagram of disposing modules or components in the stylus. A location and a quantity of the modules or components in the stylus are not limited in embodiments of this application. It should be understood that the receive electrode in the electrode module 140 and the inertial sensor 160 are not shown in FIG. 7B.

It may be understood that the structures shown in FIG. 7A and FIG. 7B do not constitute a specific limitation on the stylus 100. In some other embodiments of this application, the stylus 100 may include more or fewer components than those shown in the figure, or a combination of a part of the components, or splits from a part of the components, or an arrangement of different components. The components shown in the figure may be implemented by hardware, software, or a combination of software and hardware.

### 2. Structure of an electronic device

FIG. 8 is a diagram of a structure of an electronic device according to an embodiment of this application. Refer to FIG. 8. An electronic device 200 may include a processor 210, a memory 220, an electrode circuit 230, an electrode array 240, and a screen 250.

In some embodiments, the processor 210 may be configured to perform, coordinate, and/or manage functions of the electronic device 200. Such functions may include but are not limited to: communicating with and/or exchanging data with the stylus 100, and receiving coded signals of one or more styluses.

In some embodiments, the processor may be, for example, a microprocessor, a central processing unit, an application-specific integrated circuit, a field programmable gate array, a digital signal processor, an analog circuit, a digital circuit, or a combination of these devices. The processor may be a single-thread processor or a multi-thread processor. The processor may be a single-core processor or a multi-core processor.

The processor 210 may be configured to access the memory 220 that stores instructions. The instructions may be configured to enable the processor 210 to perform, coordinate, or monitor one or more operations or functions of the electronic device 200.

The memory 220 may store electronic data that can be used by the stylus or the processor 210. For example, the memory 220 may store data or content (such as media files, documents and applications, device settings and preferences, timing signals and control signals, or data, data structures, or databases for various modules, and files or configurations related to detection on tip signals and/or loop signals). The memory 220 may be configured as any type of memory. For example, the memory 220 may be implemented as a random access memory, a read-only memory, a flash memory, a removable memory, another type of storage element, or a combination of such devices.

The processor 210 may be configured to control the electrode circuit 220 to transmit a signal via the electrode array 230. In addition, in embodiments of this application, the processor 210 is further configured to control the electrode array 230 to detect a coded signal from the stylus 100 based on a specified sampling frequency. In some embodiments, after collecting the coded signal, the electrode circuit 220 may report the coded signal to the processor 210.

The screen 250 may be configured to display an interface of the electronic device 200. In this embodiment of this application, as a location of the stylus 100 on the screen 250 changes, the screen 250 may display a line at a corresponding location.

In some embodiments, the electronic device 200 may further include a power supply 260, a communication bus 270, and a communication port 280. The power supply 260 is configured to supply power to the electronic device 200. The communication bus 270 is configured to connect modules and components in the electronic device 200. The communication port 280 is configured to implement connection and communication between the electronic device 200 and another peripheral.

It may be understood that the structure shown in FIG. 8 does not constitute a specific limitation on the electronic device 200. In some other embodiments of this application, the electronic device 200 may include more or fewer components than those shown in the figure, or a combination of a part of the components, or splits from a part of the components, or an arrangement of different components. The components shown in the figure may be implemented by hardware, software, or a combination of software and hardware.

The following describes, with reference to specific embodiments, the method for interaction between a stylus and an electronic device provided in embodiments of this application. The following several embodiments may be combined with each other, and a same or similar concept or process may not be described repeatedly in some embodiments.

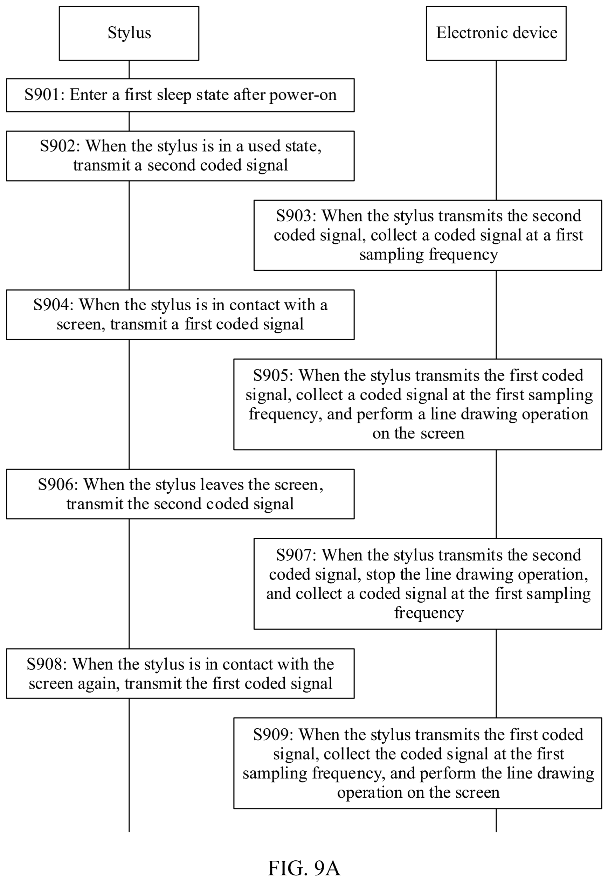

FIG. 9A is a schematic flowchart of an embodiment of a method for interaction between a stylus and an electronic device according to an embodiment of this application. Refer to FIG. 9A. The method for interaction between the stylus and the electronic device provided in this embodiment of this application may include the following steps.

S901: The stylus enters a first sleep state after being powered on.

In some embodiments, when a power module of the stylus is configured as a dry cell, and the stylus is not configured with a switch button, a user installs the dry cell, and the stylus is powered on; or the user removes the dry cell, and the stylus is powered off. In some embodiments, when the stylus is configured with a switch button, regardless of whether the power module of the stylus is configured as a dry cell or a rechargeable cell, the user may operate the switch button to control the stylus to be powered on or powered off.

After the stylus is powered on, the user may not immediately use the stylus. To reduce power consumption of the stylus, the stylus may enter a sleep state. The sleep mode includes a first sleep state (sleep1) and a second sleep state (sleep2). The first sleep state is first described in the example shown in FIG. 9A.

The first sleep state means that the stylus performs detection on an acceleration transducer. Because data collected by the acceleration transducer may represent a use status of the stylus, the stylus may detect the use status of the stylus based on the data collected by the acceleration transducer. The use status may include a used state and an unused state.

In some embodiments, an acceleration threshold may be preset, and the stylus may determine the use status of the stylus by comparing the data collected by the acceleration transducer with the acceleration threshold. For example, when the data collected by the acceleration transducer is greater than or equal to the acceleration threshold, the stylus may determine that the stylus is in the used state; or when the data collected by the acceleration transducer is less than the acceleration threshold, the stylus may determine that the stylus is in the unused state. For example, after the stylus is powered on, the user places the stylus on a desktop, and data collected by an acceleration transducer of the stylus is less than the acceleration threshold. In this case, the stylus is in the unused state. After the stylus is powered on, the user holds the stylus to start writing, the data collected by the acceleration transducer is greater than or equal to the acceleration threshold, and the stylus is in the used state.

A manner in which the stylus determines the use status of the stylus is not limited in embodiments of this application. For example, an infrared sensor may be further disposed on the stylus. When detecting that the user holds the stylus, the infrared sensor may determine that the stylus is in the used state, and the infrared sensor fails to detect that the user holds the stylus, it may be determined that the stylus is in the unused state.

S902: When the stylus is in the used state, the stylus transmits a second coded signal.

The second coded signal is a PWM wave whose frequency is a second frequency. When the stylus is in the used state, it indicates that the user is using the stylus. However, in this case, because the stylus is not in contact with a screen, the stylus may transmit the PWM wave whose frequency is the second frequency.

S903: When the stylus transmits the second coded signal, the electronic device collects a coded signal at a first sampling frequency.

It should be understood that the electronic device may determine, by detecting a frequency of the PWM wave in the coded signal transmitted by the stylus, whether the stylus is in contact with the screen. When the stylus transmits the second coded signal, for example, the electronic device detects the PWM wave whose frequency is the second frequency (namely, the second coded signal), the electronic device may determine that the stylus is not in contact with the screen. To detect, in time, that the stylus is in contact with the screen and quickly respond to and perform a line drawing operation, the electronic device may collect the coded signal at the first sampling frequency.

S904: When the stylus is in contact with the screen, the stylus transmits a first coded signal.

In some embodiments, when the stylus is in the used state, the stylus may further start to perform detection on a pressure sensor. The stylus may detect, based on data collected by the pressure sensor, whether the stylus is in contact with the screen. For details, refer to related descriptions in the foregoing embodiments.

The first coded signal is a PWM wave whose frequency is a first frequency.

In some embodiments, it may be considered that a frequency of the first coded signal is different from a frequency of the second coded signal. In some embodiments, for example, the first frequency may be included in 100 kHz to 400 kHz, and the second frequency may be included in 100 kHz to 400 kHz. In some embodiments, the frequency of the second coded signal is less than the frequency of the first coded signal. For example, the first frequency is 200 kHz, and the second frequency may be 100 kHz.

S905: When the stylus transmits the first coded signal, the electronic device collects a coded signal at the first sampling frequency, and performs a line drawing operation on the screen.

The electronic device detects a PWM wave whose frequency is the first frequency (namely, the first coded signal), and the electronic device may determine that the stylus is in contact with the screen. The electronic device may collect the coded signal at the first sampling frequency, and perform the line drawing operation based on a location of the stylus on the screen.

S906: When the stylus leaves the screen, the stylus transmits the second coded signal.

S907: When the stylus transmits the second coded signal, the electronic device stops the line drawing operation, and collects a coded signal at the first sampling frequency.

In the conventional technology, in a process in which the user holds the stylus to perform writing, when the user lifts the stylus, the electronic device enters a low power consumption mode, and collects a coded signal at a second sampling frequency. Consequently, there is a writing delay when the user falls the stylus down again. In this embodiment of this application, in a process in which the user lifts the stylus for writing, when the user lifts the stylus, the electronic device may stop the line drawing operation, and continue to collect the coded signal at the first sampling frequency. In this way, when the user falls the stylus down again, the electronic device can quickly detect the coded signal of the stylus, thereby reducing a writing delay, and improving writing immediateness of the stylus.

Refer to FIG. 5. At a moment T5, when the stylus is in contact with the screen again (the stylus falls again), the stylus continues to transmit a PWM wave whose frequency is F1 (for example, the first coded signal). In this case, sampling time of the electronic device is not hit. Refer to b in FIG. 5. In the conventional technology, when the electronic device collects the coded signal at the second sampling frequency, the electronic device can collect the coded signal and perform the writing operation on the screen only at a moment T6. Refer to c in FIG. 5. In this embodiment of this application, the electronic device collects the coded signal at the first sampling frequency, and the electronic device can collect the coded signal, and perform the writing operation on the screen only at a moment T7. Refer to b and c in FIG. 5. In this embodiment of this application, when the stylus leaves the screen, the electronic device still collects the coded signal at the first sampling frequency; and when the stylus is in contact with the screen again, the electronic device may quickly detect the coded signal of the stylus, thereby reducing a delay of the second part, and improving the writing immediateness of the stylus.

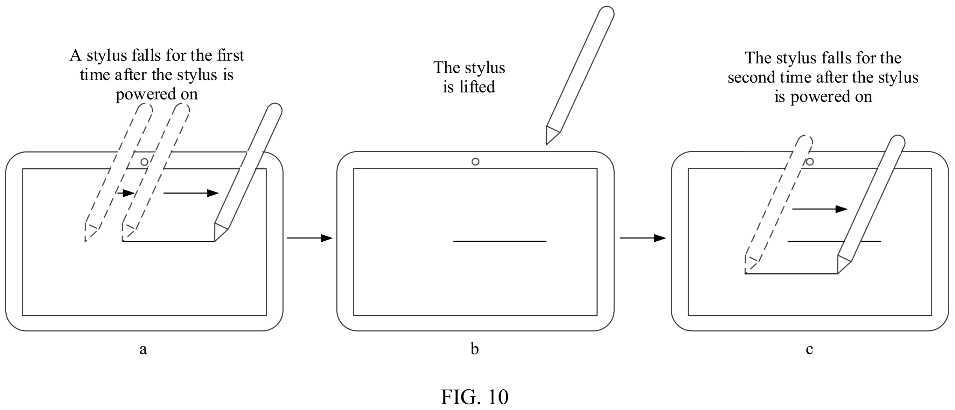

In FIG. 10, a scenario in which a writing delay is reduced in an embodiment of this application is described by using an example in which the stylus is in contact with the screen for the first time (the stylus falls for the first time) and the stylus is in contact with the screen for the second time (the stylus falls for the second time) after being powered on.

Refer to a in FIG. 10. When the stylus is in contact with the screen for the first time after being powered on, the stylus determines, based on the data collected by the pressure sensor, that the stylus is in contact with the screen, the stylus transmits the first coded signal, and the electronic device performs a line drawing operation in response to collecting the first coded signal. There is a delay of a first part in the process, and the process is not optimized in this embodiment of this application.

Refer to b in FIG. 10. After the user lifts the stylus, the stylus transmits the second coded signal. In this embodiment of this application, to quickly detect that the stylus falls next time (that is, the stylus falls for the second time), the electronic device may not enter the low power consumption mode, instead, the electronic device continues to collect the coded signal at the first sampling frequency. Refer to c in FIG. 10. When the stylus is in contact with the screen for the second time to transmit the first coded signal, because the first sampling frequency is greater than the second sampling frequency, the electronic device can collect the first coded signal earlier, and perform the line drawing operation. In this embodiment of this application, a delay of the second part is reduced, and the electronic device can perform a line drawing operation more quickly, thereby improving writing immediateness of the stylus. Refer to c in FIG. 10. When the stylus is in contact with the screen for the second time and starts drawing a line, a phenomenon that water does not flow out does not occur, and the electronic device starts to display a line when the stylus falls.

In addition, in this embodiment of this application, the stylus may transmit coded signals of different frequencies, to indicate that the stylus is in contact with the screen or leaves the screen. In this way, a trailing phenomenon can also be avoided when the electronic device performs a writing operation.

In the conventional technology, when the stylus leaves the screen in a writing process, the stylus stops sending a coded signal, and the electronic device can stop drawing a line only when the electronic device needs to fail to detect the coded signal or detects a coded signal whose frequency is 0. However, when the stylus stops sending the coded signal, the electronic device fails to immediately detect the coded signal due to impact of the electrode array on the screen or impact of other noise. In other words, it takes a long time for the electronic device to detect the coded signal whose frequency is 0. As a result, the electronic device still draws a line after the stylus is lifted, and there is a trailing phenomenon.

However, in embodiments of this application, the stylus may transmit coded signals of different frequencies, to indicate that the stylus is in contact with the screen or leaves the screen. Compared with a solution in the conventional technology in which it takes a long time for the electronic device to detect the coded signal whose frequency is 0, in this embodiment of this application, the electronic device easily distinguishes between the first frequency and the second frequency of the stylus. Compared with the coded signal whose frequency is 0, it takes a shorter time for the electronic device to detect the coded signal whose frequency is the second frequency. Therefore, when the stylus leaves the screen, the electronic device can detect the PWM wave of the second frequency (that is, the second coded signal) more quickly. In this way, the electronic device can stop drawing a line in time, to avoid a trailing phenomenon, and reduce a response delay.

In some embodiments, in response to detecting the second coded signal, the electronic device may determine that the stylus leaves the screen, and the user may continue to write, or the user may not write. To reduce power consumption of the electronic device, when the electronic device detects that a strength of the second coded signal is less than a strength threshold, it is determined that the stylus is far away from the screen (for example, a distance between the stylus and the screen is greater than or equal to a distance threshold), and the electronic device may enter a low power consumption mode.

In some embodiments, to reduce power consumption of the electronic device, if the first coded signal is not detected within preset duration after the electronic device detects the second coded signal, the electronic device may determine that the stylus is not in contact with the screen for a long time, the user may not write, and the electronic device may enter the low power consumption mode.

S908: When the stylus is in contact with the screen again, the stylus transmits the first coded signal.

S909: When the stylus transmits the first coded signal, the electronic device collects the coded signal at the first sampling frequency, and performs the line drawing operation on the screen.

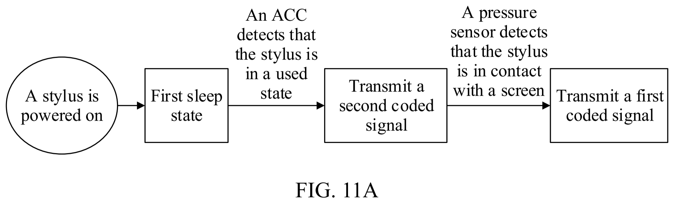

FIG. 11A is a simplified schematic flowchart of steps performed by the stylus in FIG. 9A. For details, refer to the descriptions in FIG. 9A. In FIG. 11A, an example in which the stylus falls and is lifted once is used.

In embodiments of this application, the stylus may transmit coded signals of different frequencies, to indicate that the stylus is in contact with the screen or leaves the screen. In this way, the electronic device may determine, based on the detected coded signal, that the stylus is in contact with the screen or leaves the screen. In embodiments of this application, when the stylus leaves the screen, the electronic device still collects the coded signal at the first sampling frequency. In this way, when the screen is in contact with the screen again, the electronic device can more quickly detect that the stylus is in contact with the screen, and can perform a line drawing operation in time, thereby avoiding a problem that water does not flow out when the stylus is in contact with the screen, and improving writing immediateness of the stylus. In addition, in embodiments of this application, the stylus may transmit coded signals of different frequencies, to indicate that the stylus is in contact with the screen or leaves the screen. Compared with a conventional-technology solution in which the stylus does not transmit the coded signal after leaving the screen, in this application, after the stylus leaves the screen, the second coded signal may be transmitted, so that the electronic device can detect the second coded signal more quickly, and the electronic device can stop drawing a line in time, thereby reducing a response delay and avoiding a trailing phenomenon.

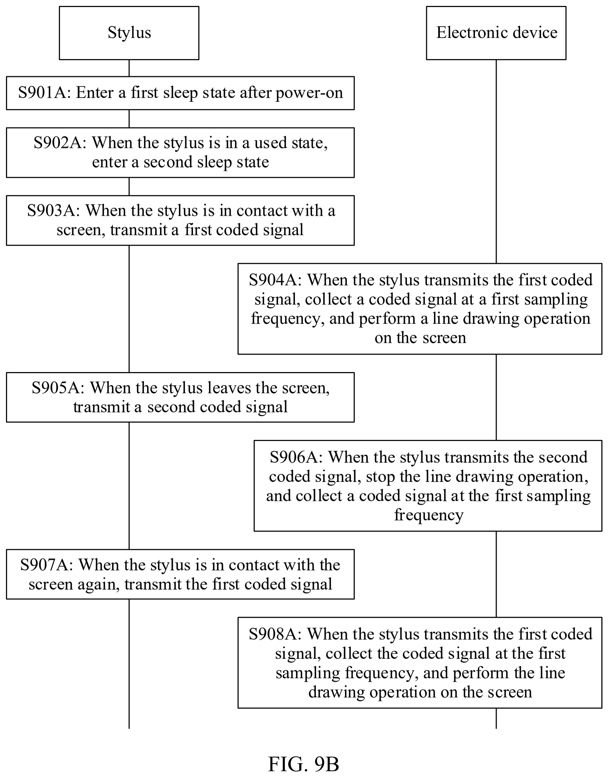

FIG. 9B is a schematic flowchart of another embodiment of a method for interaction between a stylus and an electronic device according to an embodiment of this application. Refer to FIG. 9B. The method for interaction between the stylus and the electronic device provided in this embodiment of this application may include the following steps.

S901A: The stylus enters a first sleep state after being powered on.

S902A: When the stylus is in a used state, the stylus enters a second sleep state.

The second sleep state means that the stylus performs detection on an acceleration transducer and performs detection on a pressure sensor. The stylus may detect, based on data collected by the pressure sensor, whether the stylus is in contact with a screen.

S903A: When the stylus is in contact with the screen, the stylus transmits a first coded signal.

Compared with the embodiment in FIG. 9A, in the embodiment in FIG. 9B, when the stylus is in the used state, the stylus does not need to transmit a second coded signal, but starts to perform detection on a pressure sensor. When the stylus determines, based on the data collected by the pressure sensor, that the stylus is in contact with the screen, the stylus may directly start to transmit the first coded signal. In this example, a step of transmitting the second coded signal by the stylus is reduced, and power consumption of the stylus is reduced.

In other words, in the embodiments in FIG. 9B and FIG. 9A, the stylus starts to perform detection on the pressure sensor at a same occasion (for example, when the stylus is in the used state, the stylus starts to perform detection on the pressure sensor), but the stylus transmits the coded signal in different manners. In the embodiment in FIG. 9A, when the stylus is in the used state, the stylus starts to transmit the second coded signal. In the embodiment in FIG. 9B, when the stylus is in the used state, the stylus does not need to transmit the second coded signal, instead, but the stylus transmits the first coded signal when being in contact with the screen.

S904A: When the stylus transmits the first coded signal, the electronic device collects the coded signal at a first sampling frequency, and performs a line drawing operation on the screen.

S905A: When the stylus leaves the screen, the stylus transmits the second coded signal.

S906A: When the stylus transmits the second coded signal, the electronic device stops the line drawing operation, and collects a coded signal at the first sampling frequency.

S907A: When the stylus is in contact with the screen again, the stylus transmits the first coded signal.

S908A: When the stylus transmits the first coded signal, the electronic device collects the coded signal at the first sampling frequency, and performs the line drawing operation on the screen.

For S903A to S908A, refer to descriptions in S904 to S909.

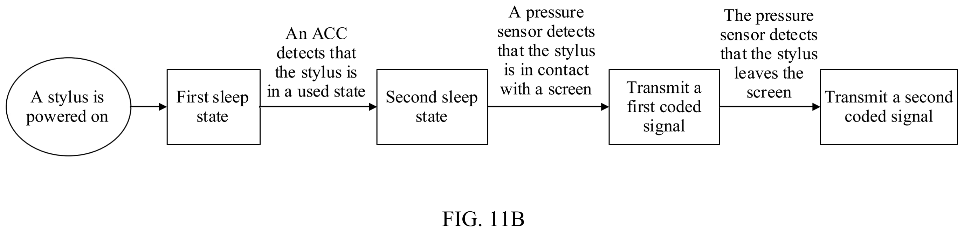

FIG. 11B is a simplified schematic flowchart of steps performed by the stylus in FIG. 9B. For details, refer to the descriptions in FIG. 9B. In FIG. 11B, an example in which the stylus falls and is lifted once is used.

In embodiments of this application, after the stylus is powered on, the stylus enters the sleep state in various manners, and the coded signal is transmitted in various manners. This facilitates flexible configuration of the stylus. In addition, this embodiment of this application has same technical effect as the embodiment shown in FIG. 9A. For details, refer to the descriptions in FIG. 9A.

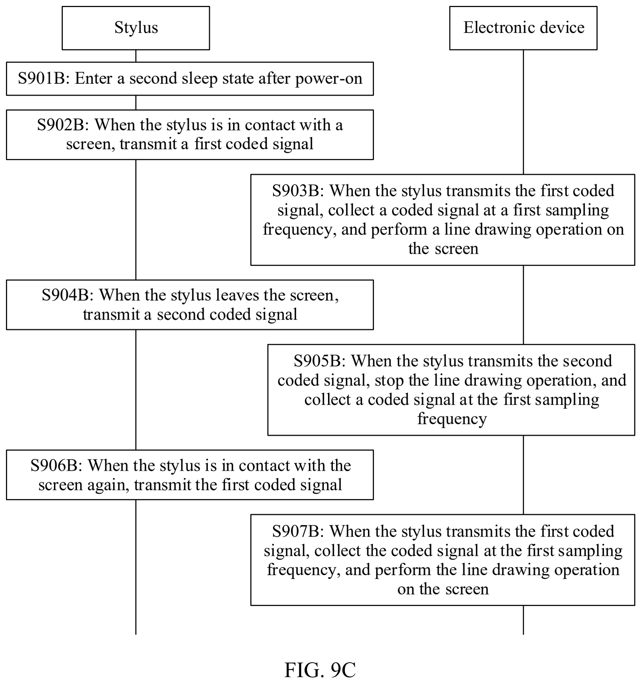

FIG. 9A shows an example in which the stylus may enter the first sleep state after being powered on, and FIG. 9B shows an example in which the stylus may enter the first sleep state and switch from the first sleep state to the second sleep state after being powered on. In some embodiments, the stylus may directly enter the second sleep state after being powered on, refer to FIG. 9C.

FIG. 9C is a schematic flowchart of another embodiment of a method for interaction between a stylus and an electronic device according to an embodiment of this application. Refer to FIG. 9C. The method for interaction between the stylus and the electronic device provided in this embodiment of this application may include the following steps.

S901B: The stylus enters a second sleep state after being powered on.

For the second sleep state, refer to the description in S902A.

Compared with FIG. 9B, in the embodiment in FIG. 9C, the stylus may directly enter the second sleep state after being powered on, and after the stylus enters the second sleep state, the stylus does not need to transmit a second coded signal, but directly performs detection on an acceleration transducer and performs detection on a pressure sensor, when the stylus determines, based on data collected by the pressure sensor, that the stylus is in contact with a screen, the stylus starts to transmit the first coded signal. In other words, in the embodiments in FIG. 9B and FIG. 9C, the stylus starts to perform detection on the pressure sensor at different occasions, but manners in which the stylus transmits the coded signal are the same.

S902B: When the stylus is in contact with the screen, the stylus transmits a first coded signal.

S903B: When the stylus transmits the first coded signal, the electronic device collects the coded signal at a first sampling frequency, and performs a line drawing operation on the screen.

S904B: When the stylus leaves the screen, the stylus transmits the second coded signal.

S905B: When the stylus transmits the second coded signal, the electronic device stops the line drawing operation, and collects a coded signal at the first sampling frequency.

S906B: When the stylus is in contact with the screen again, the stylus transmits the first coded signal.

S907B: When the stylus transmits the first coded signal, the electronic device collects the coded signal at the first sampling frequency, and performs the line drawing operation on the screen.

For S902B to S907B, refer to descriptions in S903A to S908A.

In some embodiments, similar to FIG. 9A, before S902B, the method may further include S908B and S909B.

S908B: When the stylus is in a used state, the electronic device transmits the second coded signal.

S909B: When the stylus transmits the second coded signal, the electronic device collects a coded signal at the first sampling frequency.

For S908B and S909B, refer to descriptions in S902 and S903.

It should be understood that a difference between this example and the embodiment in FIG. 9A lies in that the stylus enters different sleep states after being powered on, but manners in which the stylus transmits the coded signal are the same. A difference between this example and the embodiment in FIG. 9B lies in that the stylus enters different sleep states after being powered on, and manners in which the stylus transmits the coded signal are different. A difference between this example and the embodiment in FIG. 9C lies in that the stylus enters a same sleep state after being powered on, and manners in which the stylus transmits the coded signal are different.

In embodiments of this application, after the stylus is powered on, the stylus enters the sleep state in various manners, and the coded signal is transmitted in various manners. This facilitates flexible configuration of a stylus side. In addition, this embodiment of this application has same technical effect as the embodiment shown in FIG. 9A. For details, refer to the descriptions in FIG. 9A.

In the embodiments shown in FIG. 9A to FIG. 9C, a method for transmitting the first coded signal when the stylus is in contact with the screen and transmitting the second coded signal when the stylus leaves the screen after the stylus is powered on is described. In this method, when the stylus leaves the screen, if the user no longer uses the stylus, but the stylus still keeps transmitting the second coded signal, power consumption of the stylus is high. In this embodiment of this application, a sleep mechanism of the stylus may be provided, to reduce power consumption of the stylus in a process of using the stylus.

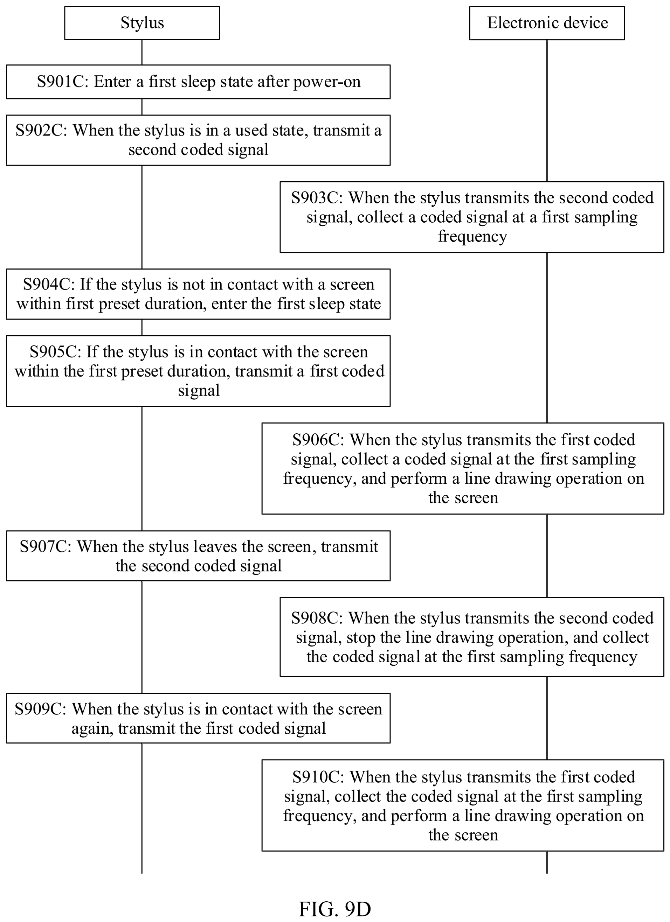

FIG. 9D is a schematic flowchart of another embodiment of a method for interaction between a stylus and an electronic device according to an embodiment of this application. It should be understood that FIG. 9D is improved based on FIG. 9A.

Refer to FIG. 9D. The method for interaction between the stylus and the electronic device provided in this embodiment of this application may include the following steps.

S901C: The stylus enters a first sleep state after being powered on.

S902C: When the stylus is in a used state, the stylus transmits a second coded signal.

When the stylus transmits the second coded signal, the electronic device collects a coded signal at a first sampling frequency.

S904C: If the stylus is not in contact with a screen within first preset duration, the stylus enters the first sleep state.

S905C: If the stylus is in contact with the screen within the first preset duration, the stylus transmits a first coded signal.

Different from the embodiment in FIG. 9A, a sleep mechanism of the stylus is added in this embodiment of this application. When it is detected that the stylus is in a used state, the stylus may start timing, or when the stylus starts to transmit the second coded signal, the stylus may start timing. If the stylus is not in contact with the screen within the first preset duration, it indicates that a user has not been writing. To reduce power consumption of the stylus, the stylus may no longer transmit the second coded signal, but enter the first sleep state. Similarly, if the stylus is in contact with the screen within the first preset duration of timing, it indicates that the user writes, and the stylus may transmit the first coded signal.

In some embodiments, for example, the first preset duration may be 1 minute.

If the stylus is not in contact with the screen within the first preset duration, when the stylus enters the first sleep state, the electronic device fails to detect the coded signal from the stylus, and the electronic device may enter a low power consumption mode, or the electronic device may enter a low power consumption mode after fourth preset duration.

S906C: When the stylus transmits the first coded signal, the electronic device collects a coded signal at the first sampling frequency, and performs a line drawing operation on the screen.

S907C: When the stylus leaves the screen, the stylus transmits the second coded signal.

Similarly, when the stylus starts to transmit the second coded signal, the stylus may start timing. If the stylus is not in contact with the screen within third preset duration of timing, the stylus may no longer transmit the second coded signal, but enter the first sleep state. Similarly, if the stylus is in contact with the screen within the third preset duration of timing, the stylus may perform S907C. It should be understood that this step is not shown in FIG. 9D.

In some embodiments, the third preset duration may be equal to or different from the first preset duration. For example, the third preset duration may be 5s.

S908C: When the stylus transmits the second coded signal, the electronic device collects the coded signal at the first sampling frequency.

S909C: When the stylus is in contact with the screen again, the stylus transmits the first coded signal.

S910C: When the stylus transmits the first coded signal, the electronic device collects the coded signal at the first sampling frequency, and performs the line drawing operation on the screen.

For S906C to S910C, refer to descriptions in S905 to S909.

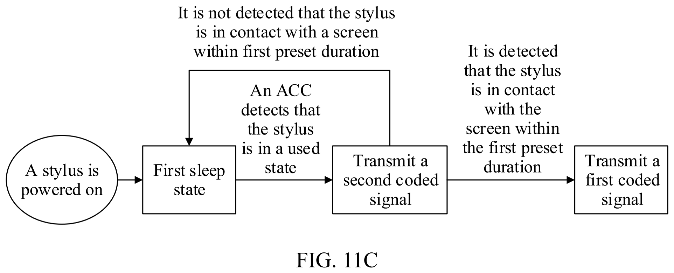

FIG. 11C is a simplified schematic flowchart of steps performed by the stylus in FIG. 9D. For details, refer to the descriptions in FIG. 9D. In FIG. 11C, an example in which the stylus falls and is lifted once is used.

In this embodiment of this application, when the stylus transmits the second coded signal, it indicates that the stylus leaves the screen or the stylus is not in contact with the screen. In this case, if the stylus is in contact with the screen within the first preset duration, the stylus may transmit the first coded signal to interact with the electronic device; and if the stylus is not in contact with the screen within the first preset duration, the stylus may enter the first sleep state, and no longer transmit the second coded signal. In this way, power consumption of the stylus can be reduced.

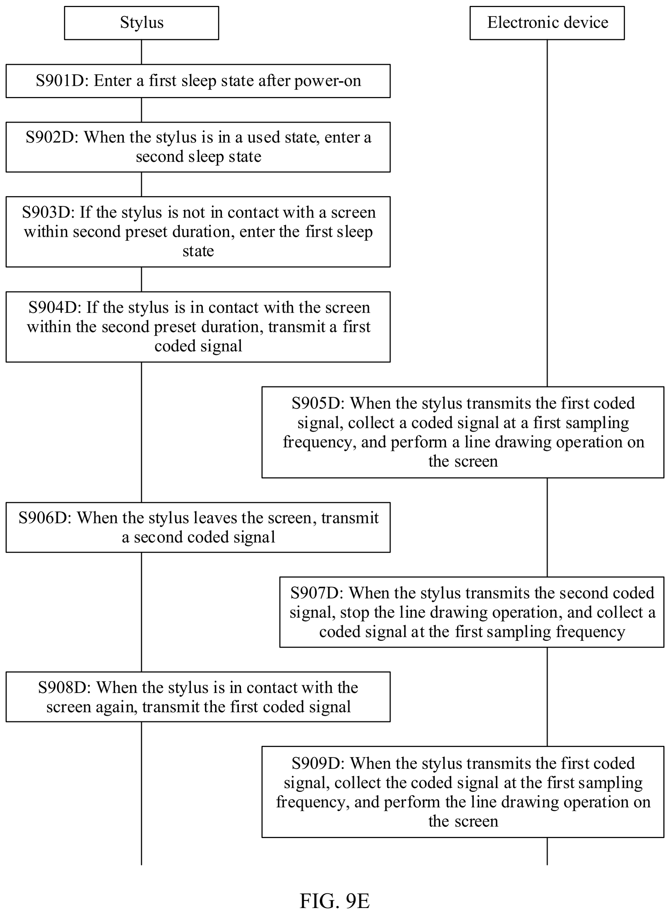

FIG. 9E is a schematic flowchart of another embodiment of a method for interaction between a stylus and an electronic device according to an embodiment of this application. It should be understood that FIG. 9E is improved based on FIG. 9B.

Refer to FIG. 9E. The method for interaction between the stylus and the electronic device provided in this embodiment of this application may include the following steps.

S901D: The stylus enters a first sleep state after being powered on.

S902D: When the stylus is in a used state, the stylus enters a second sleep state.

For S901D and S902D, refer to descriptions in S901A and S902A.

S903D: If the stylus is not in contact with a screen within second preset duration, the stylus enters the first sleep state.

S904D: If the stylus is in contact with the screen within the second preset duration, the stylus transmits a first coded signal.

Different from the embodiment in FIG. 9A, a sleep mechanism of the stylus is added in this embodiment of this application. When the stylus is in the used state, the stylus may start timing, or when the stylus starts to transmit a second coded signal, the stylus may start timing. If the stylus is not in contact with the screen within the second preset duration, it indicates that a user has not been writing. To reduce power consumption of the stylus, the stylus may not perform detection on the pressure sensor, but enter the first sleep state. Similarly, if the stylus is in contact with the screen within first preset duration of timing, it indicates that a user writes, and the stylus may transmit the first coded signal.

In some embodiments, for example, the second preset duration may be equal to or different from the first preset duration.

If the stylus is not in contact with the screen within the second preset duration, when the stylus enters the first sleep state, the electronic device fails to detect the coded signal from the stylus, and the electronic device may enter a low power consumption mode, or the electronic device may enter a low power consumption mode after fourth preset duration.

S905D: When the stylus transmits the first coded signal, the electronic device collects a coded signal at a first sampling frequency, and performs a line drawing operation on the screen.

S906D: When the stylus leaves the screen, the stylus transmits the second coded signal.

S907D: When the stylus transmits the second coded signal, the electronic device collects a coded signal at the first sampling frequency.

Similarly, when the stylus starts to transmit the second coded signal, the stylus may start timing. If the stylus is not in contact with the screen within third preset duration of timing, the stylus may no longer transmit the second coded signal, but enter the second sleep state. Similarly, if the stylus is in contact with the screen within the third preset duration of timing, the stylus may perform S908D. It should be understood that this step is not shown in FIG. 9E.

S908D: When the stylus is in contact with the screen again, the stylus transmits the first coded signal.

S909D: When the stylus transmits the first coded signal, the electronic device collects the coded signal at the first sampling frequency, and performs the line drawing operation on the screen.

For S905D to S909D, refer to descriptions in S904A to S908A.

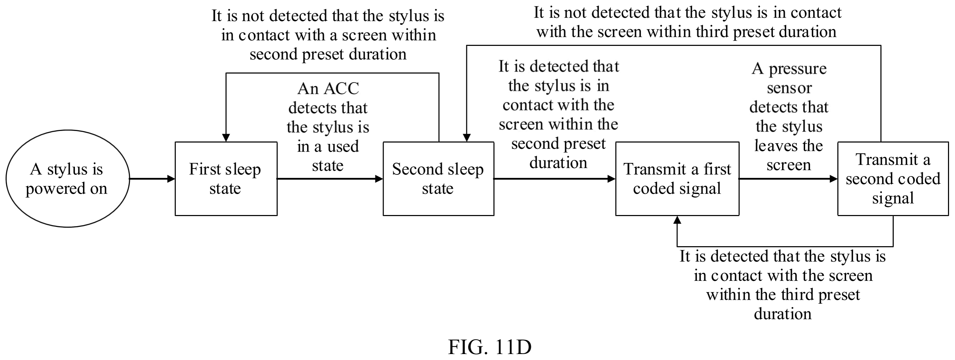

FIG. 11D is a simplified schematic flowchart of steps performed by the stylus in FIG. 9E. For details, refer to the descriptions in FIG. 9E. In FIG. 11D, an example in which the stylus falls and is lifted once is used.

In this embodiment of this application, when the stylus transmits the second coded signal, it indicates that the stylus leaves the screen or the stylus is not in contact with the screen. In this case, if the stylus is in contact with the screen within the second preset duration, the stylus may transmit the first coded signal to interact with the electronic device; and if the stylus is not in contact with the screen within the second preset duration, the stylus may enter the second sleep state, and no longer transmit the second coded signal. In this way, power consumption of the stylus can be reduced.

It should be understood that, in the embodiment shown in FIG. 9C, when the stylus transmits the second coded signal, if the stylus is in contact with the screen within the second preset duration, the stylus may transmit the first coded signal to interact with the electronic device; and if the stylus is not in contact with the screen within the second preset duration, the stylus may enter the second sleep state, and no longer transmit the second coded signal. In this way, power consumption of the stylus can be reduced.

It should be noted that data (including but not limited to data used for analysis, stored data, displayed data, and the like) in this application are information and data for which an authorization is obtained from a user or a full authorization is obtained from each party, and the collection, use, and processing of related data need to comply with related laws, regulations, and standards of related countries and regions. Corresponding operation entries are provided for the user to choose to authorize or deny.

The term "a plurality of" in this specification refers to two or more. The term "and/or" in this specification describes only an association relationship for describing associated objects and represents that three relationships may exist. For example, A and/or B may represent the following three cases: Only A exists, both A and B exist, and only B exists. In addition, a character "/" in this specification usually indicates an "or" relationship between associated objects, and a character "/" in a formula usually indicates a "divisible" relationship between associated objects. In addition, it should be understood that in description of this application, terms such as "first" and "second" are merely used for distinguishing and description, but should not be understood as indicating or implying relative importance, or should not be understood as indicating or implying a sequence.

It may be understood that various numbers in embodiments of this application are merely used for differentiation for ease of description, and are not used to limit the scope of embodiments of this application.

It should be understood that sequence numbers of the foregoing processes do not mean execution sequences in embodiments of this application. The execution sequences of the processes should be determined according to functions and internal logic of the processes, and should not be construed as any limitation on the implementation processes of embodiments of this application.

## Claims

1. A method for interaction between a stylus and an electronic device, comprising:
transmitting, by the stylus, a first coded signal when the stylus is in contact with a screen of the electronic device;
when the stylus transmits the first coded signal, collecting, by the electronic device, a coded signal at a first sampling frequency, and performing a writing operation;
when the stylus leaves the screen, transmitting, by the stylus, a second coded signal, wherein a frequency of the first coded signal is different from a frequency of the second coded signal; and
when the stylus transmits the second coded signal, collecting, by the electronic device, a coded signal at the first sampling frequency.

2. The method according to claim 1, wherein before the stylus is in contact with the screen of the electronic device, the method further comprises:
entering a first sleep state after the stylus is powered on, wherein when the stylus enters the first sleep state, the stylus performs detection on an acceleration transducer; or
entering a second sleep state after the stylus is powered on, wherein when the stylus enters the second sleep state, the stylus performs detection on an acceleration transducer and performs detection on a pressure sensor.

3. The method according to claim 2, wherein after entering the first sleep state, the method further comprises:
when it is determined, based on data collected by the acceleration transducer, that the stylus is in a used state, transmitting, by the stylus, the second coded signal, and detecting, based on data collected by the pressure sensor, whether the stylus is in contact with the screen; and
when the stylus transmits the second coded signal, collecting, by the electronic device, a coded signal at the first sampling frequency.

4. The method according to claim 3, wherein after transmitting, by the stylus, the second coded signal, the method further comprises:
if it is not detected, within first preset duration, that the stylus is in contact with the screen, entering, by the stylus, the first sleep state; and
transmitting, by the stylus, the first coded signal when the stylus is in contact with the screen of the electronic device comprises:
if it is detected, within the first preset duration, that the stylus is in contact with the screen, transmitting, by the stylus, the first coded signal.

5. The method according to claim 2, wherein after entering the first sleep state, the method further comprises:
when it is determined, based on data collected by the acceleration transducer, that the stylus is in a used state, entering, by the stylus, the second sleep state.

6. The method according to claim 2 or 5, wherein after entering the second sleep state, the method further comprises:
detecting, by the stylus based on data collected by the pressure sensor, whether the stylus is in contact with the screen.

7. The method according to claim 6, wherein the method further comprises:
if it is not detected, within second preset duration, that the stylus is in contact with the screen, entering, by the stylus, the first sleep state; and
transmitting, by the stylus, the first coded signal when the stylus is in contact with the screen of the electronic device comprises:
if it is detected, within the second preset duration, that the stylus is in contact with the screen, transmitting, by the stylus, the first coded signal.

8. The method according to claim 6 or 7, wherein after transmitting, by the stylus, the second coded signal, the method further comprises:
if it is not detected, within third preset duration, that the stylus is in contact with the screen, entering, by the stylus, the second sleep state; and
if it is detected, within the third preset duration, that the stylus is in contact with the screen, transmitting, by the stylus, the first coded signal.

9. The method according to any one of claims 1 to 8, wherein when the stylus transmits the second coded signal, after collecting, by the electronic device, the coded signal at the first sampling frequency, the method further comprises:
when the stylus is in contact with the screen again, transmitting, by the stylus, the first coded signal; and
when the stylus transmits the first coded signal, collecting, by the electronic device, the coded signal at the first sampling frequency, and performing the writing operation.

10. A method for interaction between a stylus and an electronic device, applied to the stylus, wherein the method comprises:
transmitting a first coded signal when being in contact with a screen of the electronic device; and
transmitting a second coded signal when leaving the screen, wherein a frequency of the first coded signal is different from a frequency of the second coded signal.

11. The method according to claim 10, wherein before the stylus is in contact with the screen of the electronic device, the method further comprises:
entering a first sleep state after power-on, wherein when entering the first sleep state, the stylus performs detection on an acceleration transducer; or
entering a second sleep state after power-on, wherein when entering the second sleep state, the stylus performs detection on an acceleration transducer and performs detection on a pressure sensor.

12. The method according to claim 11, wherein after entering the first sleep state, the method further comprises:
when it is determined, based on data collected by the acceleration transducer, that the stylus is in a used state, transmitting the second coded signal, and detecting, based on data collected by the pressure sensor, whether the stylus is in contact with the screen.

13. The method according to claim 12, wherein after transmitting the second coded signal, the method further comprises:
if it is not detected, within first preset duration, that the stylus is in contact with the screen, entering the first sleep state; and
transmitting the first coded signal when being in contact with the screen of the electronic device comprises:
if it is detected, within the first preset duration, that the stylus is in contact with the screen, transmitting the first coded signal.

14. The method according to claim 11, wherein after entering the first sleep state, the method further comprises:
when it is determined, based on data collected by the acceleration transducer, that the stylus is in a used state, entering the second sleep state.

15. The method according to claim 11 or 14, wherein after entering the second sleep state, the method further comprises:
detecting, based on data collected by the pressure sensor, whether the stylus is in contact with the screen.

16. The method according to claim 15, wherein the method further comprises:
if it is not detected, within second preset duration, that the stylus is in contact with the screen, entering the first sleep state; and
transmitting the first coded signal when being in contact with the screen of the electronic device comprises:
if it is detected, within the second preset duration, that the stylus is in contact with the screen, transmitting the first coded signal.

17. The method according to claim 15 or 16, wherein after transmitting the second coded signal, the method further comprises:
if it is not detected, within third preset duration, that the stylus is in contact with the screen, entering the second sleep state; and
if it is detected, within the third preset duration, that the stylus is in contact with the screen, transmitting the first coded signal.

18. The method according to any one of claims 10 to 17, wherein after transmitting the second coded signal when leaving the screen, the method further comprises:
when being in contact with the screen again, transmitting the first coded signal.

19. A method for interaction between a stylus and an electronic device, applied to the electronic device, wherein the method comprises:
when the stylus transmits a first coded signal, collecting a coded signal at a first sampling frequency, and performing a writing operation, wherein the first coded signal is transmitted when the stylus is in contact with a screen of the electronic device; and
when the stylus transmits a second coded signal, collecting a coded signal at the first sampling frequency, wherein the second coded signal is transmitted when the stylus leaves the screen, and a frequency of the first coded signal is different from a frequency of the second coded signal.

20. The method according to claim 19, wherein when the stylus transmits the second coded signal, after collecting the coded signal at the first sampling frequency, the method further comprises:
when a strength of the second coded signal is less than or equal to a strength threshold, detecting the coded signal at a second sampling frequency, wherein the second sampling frequency is less than the first sampling frequency.

21. A stylus, comprising a processor and a memory, wherein
the memory stores computer-executable instructions; and
the processor executes the computer-executable instructions stored in the memory, to cause the processor to perform the method according to any one of claims 10 to 18.

22. An electronic device, comprising a processor and a memory, wherein
the memory stores computer-executable instructions; and
the processor executes the computer-executable instructions stored in the memory, to cause the processor to perform the method according to claim 19 or 20.

23. A system for interaction between a stylus and an electronic device, comprising the stylus according to claim 21 and the electronic device according to claim 22.

24. A computer-readable storage medium, wherein the computer-readable storage medium stores a computer program or instructions, and when the computer program or the instructions are run, the method according to any one of claims 10 to 20 is implemented.
